(19) Europäisches Patentamt

European Patent Office

Office européen des brevets

(11) **EP 1 505 533 A2**

## (12) EUROPEAN PATENT APPLICATION

(43) Date of publication:
**09.02.2005 Bulletin 2005/06**

(51) Int Cl.$^7$: **G06K 9/00**

(21) Application number: **04014761.3**

(22) Date of filing: **23.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.08.2003 JP 2003289502**

(71) Applicant: **Hitachi, Ltd.**
**Chiyoda-ku, Tokyo 101-8010 (JP)**

(72) Inventors:
• **Kagawa, Naoki Hitachi, Ltd. Intell. Prop. Group Chiyoda-ku Tokyo 100-8220 (JP)**
• **Hori, Tetsuya Hitachi, Ltd. Intell. Prop. Group Chiyoda-ku Tokyo 100-8220 (JP)**

(74) Representative: **Strehl Schübel-Hopf & Partner Maximilianstrasse 54 80538 München (DE)**

## (54) Label reader system with resolution adjustment

(57) A label reader system of the invention takes an image of a label and recognizes characters on the label according to a format definition without being significantly affected by a variation in distance between an imaging unit and the label. The label reader system has an imaging unit that is fixed to an arm and takes an image of an address label pasted on the top face of a parcel downward in a vertical direction. The image of the address label includes an image of a guide of known dimensions located on the top face of the parcel. The procedure of the invention computes an actual degree of fineness, which varies with a variation in height of the parcel, based on the image of the guide and regulates a zoom magnification of a lens in the imaging unit to make the computed actual degree of fineness substantially equal to a specified degree of fineness in a format definition, which is used to recognize characters on the address label. This arrangement effectively compensates for a difference between the actual degree of fineness and the specified degree of fineness under the condition of the varying height of the parcel, thus enhancing the accuracy of character recognition on the address label.

Fig.2

EP 1 505 533 A2

## Description

BACKGROUND OF THE INVENTION

Field of the Invention

The present invention relates to a label reader system that takes an image of a label or another slip with characters thereon to generate raster data.

Description of the Related Art

Various address reading devices have been developed and used to automatically read and sort addresses of mails (see, for example, Japanese Patent Laid-Open Gazette No. 2001-38303). The address is generally written in a preset range. A postal address character area is specified by coordinate values in image data taken with a camera. A database storing coordinate data corresponding to the positions of respective character areas in the range is called a format definition. The address reading device refers to this format definition, extracts image sections corresponding to the respective character areas, for example, the postal address character area, from the image data, and carries out character recognition of the extracted image sections according to the requirements.

Among these address-reading devices, there is a stand-type address reading device that uses a camera held on an arm to read the postal address on an address label pasted on the surface of a parcel. Parcels generally have varying heights. In the stand-type address reading device, the distance between the camera and the address label (hereafter referred to as the imaging distance) varies with a variation in height of the parcel. The variation in imaging distance changes the actual degree of fineness of the camera. The degree of fineness represents the number of pixels per unit length and may be expressed as the resolution.

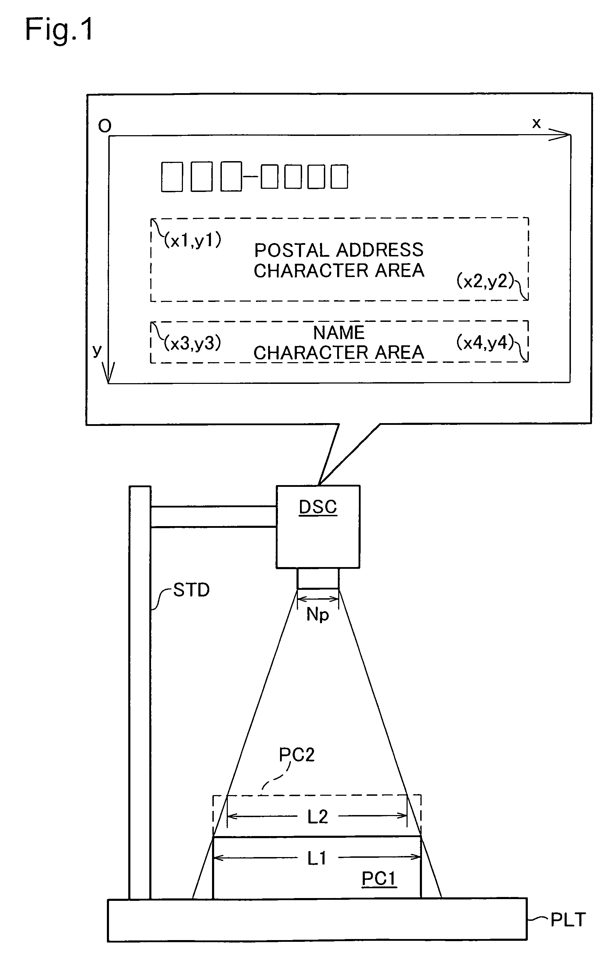

Fig. 1 shows effects of the height of a parcel on the actual degree of fineness. In a label reader system shown in Fig. 1, an image of the top face of a parcel PC1 placed on a base PLT is taken downward in the vertical direction with a digital camera DSC fixed to an arm STD. The digital camera DSC has an angle of view shown in Fig. 1. As long as the parcel PC1 has a standard height, a distance L1 on the parcel PC1 corresponds to a number of pixels Np in the image taken with the digital camera. An example of the format definition is given in the upper portion of the illustration. The format definition is used to recognize characters on the address label pasted on the parcel. In this illustrated example, the format definition stores coordinate values (x1,y1) and (x2,y2) at corners specifying a postal address character area and coordinate values (x3,y3) and (x4,y4) at corners specifying a name character area on axes x and y defined relative to the left upper corner of the address label as the origin. These coordinate values are defined in the standard imaging state discussed above.

There is a tall parcel PC2 shown by the broken line. Under the condition of the fixed angle of view of the digital camera DSC, in the case of taking an image of the top face of the parcel PC2, a length L2 corresponds to the number of pixels Np. The length L2 is shorter than the length L1 on the top face of the parcel PC1 of the standard height. The degree of fineness (Np/L2) in the image of the tall parcel PC2 is accordingly greater than the degree of fineness (Np/L1) in the image of the parcel PC1 of the standard height. The difference in degree of fineness is equivalent to a difference in number of pixels per unit length. The coordinate values at the corners of a postal address character area and a name character area on an address label pasted on the parcel PC2 are accordingly deviated from the coordinate values in the format definition. Such deviation may lead to misrecognition of character strings corresponding to the postal address and the name.

SUMMARY OF THE INVENTION

In the conventional stand-type address reading device, there is a possibility of misrecognition of characters, due to a deviation of the actual degree of fineness from the specified value according to the variation in height of the parcel. This drawback is not restrictive to the address reading device but is commonly found in any label reading devices that refer to a format definition and read characters written on a label. The label reader system of the invention thus aims to eliminate the effects of a variation in distance between an imaging unit and a label and enhance accuracy of recognition of characters on the label.

In order to attain at least part of the above and the other related objects, the invention is directed to a label reader system that takes an image of a label and thereby generates raster data. The label reader system includes: an imaging module that takes an image of the label; and a fineness degree compensation module that makes compensation and thereby restricts a difference between a specified degree of fineness in a format definition for defining a position of each character area included in the label and an actual degree of fineness in image data taken by the imaging module to a preset allowable range. It is preferable that the compensation makes the actual degree of fineness substantially equal to the specified degree of fineness.

In the label reader system of the invention, the function of the fineness degree compensation module desirably prevents deterioration of recognition accuracy, due to a difference between the specified degree of fineness and the actual degree of fineness with a variation in distance between the imaging module and the label. In the structure of the invention, for example, a digital camera or a scanner may be applied to the imaging module. It is desirable that the imaging module is arranged in the label reader system to take an image of the label in a direction practically normal to the label.

In the label reader system of the invention, diverse methods may be applied to make the compensation. A first method regulates an optical system of the imaging module. One typical example is regulation of a zoom magnification of the imaging module. This arrangement implements the compensation, while keeping the picture quality of the image at a desirable level.

A second method carries out fineness degree conversion with regard to at least one of image data taken by the imaging module and the format definition. The fineness degree conversion of the image data is attained, for example, by skipping of pixels or interpolation of pixels. The fineness degree conversion of the format definition is attained, for example, by transformation of coordinate values stored in the format definition. This second method effectively compensates for the difference between the actual degree of fineness and the specified degree of fineness, even when the imaging module does not have an optical compensation mechanism. The compensation may be carried out immediately after the image-taking step or in the process of comparing the image with the format definition.

A third method controls a regulation mechanism that regulates the distance between the imaging module and the label when the image of the label is taken. This method moves at least one of the imaging module and the label to set the distance between the imaging module and the label to a standard value and thereby compensates for the difference between the actual degree of fineness and the specified degree of fineness.

In the label reader system of the invention, diverse methods may be applied to determine the actual degree of fineness. A first method determines the actual degree of fineness, based on image data taken where a guide member with at least two reference markers set at a known distance is located to be in contact with surface of the label. This method determines the actual degree of fineness according to the distance between the reference markers and the number of pixels between the reference markers. The guide member may be attached to the label reader system of the invention or may be a separate part.

A second method uses a marker projection module that projects at least two reference markers at a known fixed distance, regardless of a varying distance between the label and the imaging module, on surface of the label. This method determines the actual degree of fineness, based on image data obtained by taking an image of the at least two reference markers projected on the surface of the label. This method does not require positioning of the guide member for determination of the actual degree of fineness, thus desirably simplifying the series of operations. A typical example of the marker projection module is a laser light source that emits laser beams in a direction normal to the label.

A third method determines the actual degree of fineness, based on image data obtained by taking an image of at least two different positions in the label at a known distance. When a subject label has known dimensions, the actual degree of fineness may be determined according to a distance between preset corners. At least two markers at a known distance may be printed in advance on the label. The third method readily determines the actual degree of fineness without requiring any additional structure like the guide member or the marker projection module.

In the label reader system of the invention, the determination of the actual degree of fineness is not restricted to the above methods. The actual degree of fineness may be determined, based on the distance between the imaging module and the label and a zoom magnification of the imaging module. The label reader system of the invention may use any of diverse parameters convertible into the degree of fineness, for example, the number of pixels between reference markers, the distance between the imaging module and the label, and the zoom magnification of the imaging module.

In one preferable embodiment of the invention, the label reader system determines actual degrees of fineness in at least two different directions, based on at least three reference markers that are set on surface of the label to be not aligned, and makes the compensation with regard to the at least two different directions, based on the actual degrees of fineness thus determined. This arrangement further enhances the accuracy of character recognition. The compensation may be made individually with regard to the at least two different directions. The compensation may otherwise be made in a comprehensive manner with an average of the actual degrees of fineness determined in the at least two different directions.

The technique of the invention is not restricted to the label reader system having any of the above arrangements but is also attained by a control method of such a label reader system and a label reading method. Other possible applications of the invention include computer programs that attain the control and the image processing of the image and the format definition executed in the label reader system and computer readable media (recording media) in which such computer programs are recorded. Typical examples of the recording media include flexible disks, CD-ROMs, magneto-optic disks, IC cards, ROM cartridges, punched cards, prints with barcodes or other codes printed thereon, internal storage devices (memories like RAM and ROM) and external storage devices of the computer, and a diversity of other computer readable media.

These and other objects, features, aspects, and advantages of the present invention will become more apparent from the following detailed description of the preferred embodiments with the accompanying drawings.

BRIEF DESCRIPTION OF THE DRAWINGS

Preferred embodiments of the present invention are now described in conjunction with the accompanied drawings, in which:

Fig. 1 shows effects of the height of a parcel on the actual degree of fineness;
Fig. 2 schematically illustrates the configuration of a label reader system in a first embodiment of the invention;
Fig. 3 shows the structure of a guide included in the label reader system of the first embodiment;
Fig. 4 is a flowchart showing an imaging control routine executed in the first embodiment;
Fig. 5 is a flowchart showing an imaging control routine executed in a first modified example;
Fig. 6 is a flowchart showing a label reading routine executed in a second modified example;
Fig. 7 shows fineness degree conversion of format definition;
Fig. 8 schematically illustrates the configuration of another label reader system in a second embodiment of the invention; and
Fig. 9 shows a method of determining the actual degree fineness with laser spots.

DESCRIPTION OF THE PREFERRED EMBODIMENTS

Some modes of carrying out the invention are discussed below as preferred embodiments.

A. System Configuration

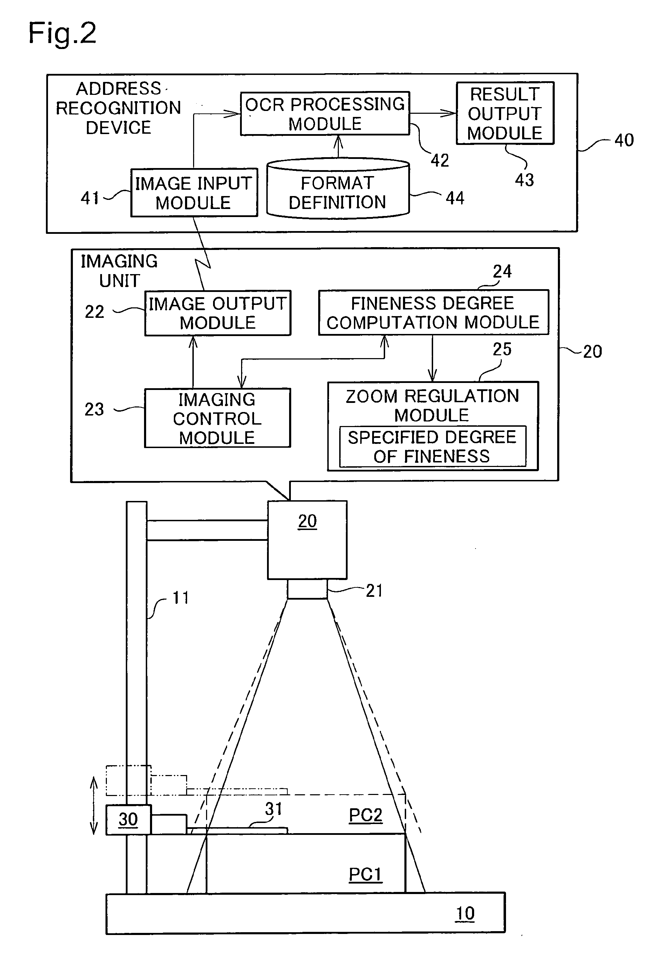

Fig. 2 schematically illustrates the configuration of a label reader system in a first embodiment of the invention. The label reader system of the first embodiment reads the characters on an address label pasted on the top face of a parcel. The label reader system of the embodiment mainly includes an imaging device with an imaging unit 20 and an address recognition device 40 that reads an image taken by the imaging unit 20 to recognize an address.
The address recognition device 40 is actualized, for example, by installing a computer program for address recognition in a general-purpose personal computer. As shown in Fig. 2, the address recognition device 40 has multiple functional blocks actualized as the software configuration by this computer program.
An image input module 41 receives input of an image, which is taken by shooting an address label with the imaging unit 20, via a cable and a recording medium. An OCR processing module 42 extracts respective character areas including those of the postal address and the name from the image of the address label and carries out character recognition in the extracted character areas. A format definition 44 stores coordinates for specifying the respective character areas including those of the postal address and the name in a coordinate system defined in the image, as shown in Fig. 1. The coordinates may be set, based on an arbitrary degree of fineness. In this embodiment, the coordinates are set, based on the image of the address label taken at a degree of fineness equal to 400 DPI (dots per inch). The OCR processing module 42 refers to this format definition 44 for character recognition. A result output module 43 outputs the result of the character recognition.
The imaging device includes a base 10 and the imaging unit 20. A parcel PC1 is placed on the base 10. An arm 11 for holding the imaging unit 20 is fixed to the base 10. The imaging unit 20 includes a digital camera and a control circuit for controlling the operations of the digital camera and takes an image of the top face of the parcel PC1 from the upper position in the vertical direction.
Some angles of view of the imaging unit 20 are shown by the solid lines and by the broken lines in Fig. 2. A lens 21 has a zoom function to optically vary the angle of view. The angle of view to read an address label pasted on a tall parcel PC2 (shown by the broken lines) is naturally wider than the angle of view to read an address label pasted on a short parcel PC1 (shown by the solid lines). The wider angle of view is equivalent to the lower zoom magnification, whereas the narrower angle of view is equivalent to the higher zoom magnification.
A guide 31 is attached to the arm 11 by means of a vertically movable holder element 30. The holder element 30 is manually moved according to the height of each parcel to place the guide 31 along the top face of the parcel. The zoom magnification of the lens 21 is determined according to an image of an address label with the guide 31, as described later.
The control circuit of the imaging unit 20 has multiple functional blocks as shown in Fig. 2. The control circuit is constructed as a microcomputer including a CPU, a ROM, and a RAM. These functional blocks are actualized as the software configuration by a program stored in the ROM, although the functional blocks may be structured by the hardware.
An imaging control module 23 controls the operations of the digital camera to take an image of each address label. The procedure of this embodiment carries out two-stage imaging, that is, preliminary imaging to compute the actual degree of fineness of the address label and real imaging to acquire image data for label recognition. The preliminary imaging is executed in response to an instruction from a fineness degree computation module 24. The real imaging is executed after adjustment of the zoom magnification of the lens 21. The image taken by the real imaging is output to the address recognition device 40 via an image output module 22.
The fineness degree computation module 24 outputs an instruction of preliminary imaging to the imaging control module 23, when the parcel PC1 is placed on the base 10 and the guide 31 is located along the top face of the parcel PC1. The instruction may be output in response to an operator's manipulation or may be output automatically at a preset timing, for example, at a timing when a stop of the movement of the guide 31 is detected or at a timing when a predetermined time period elapses since placement of the parcel PC1.

The fineness degree computation module 24 computes the actual degree of fineness according to an image of an address label with the guide 31. The method of computing the actual degree of fineness will be described later. A zoom regulation module 25 regulates the zoom magnification of the lens 21 to make the actual degree of fineness substantially equal to the degree of fineness specified in the format definition 44 (hereafter referred to as 'specified degree of fineness'). As mentioned previously, the specified degree of fineness in this embodiment is equal to 400 DPI. The method of setting the zoom magnification will be discussed later.

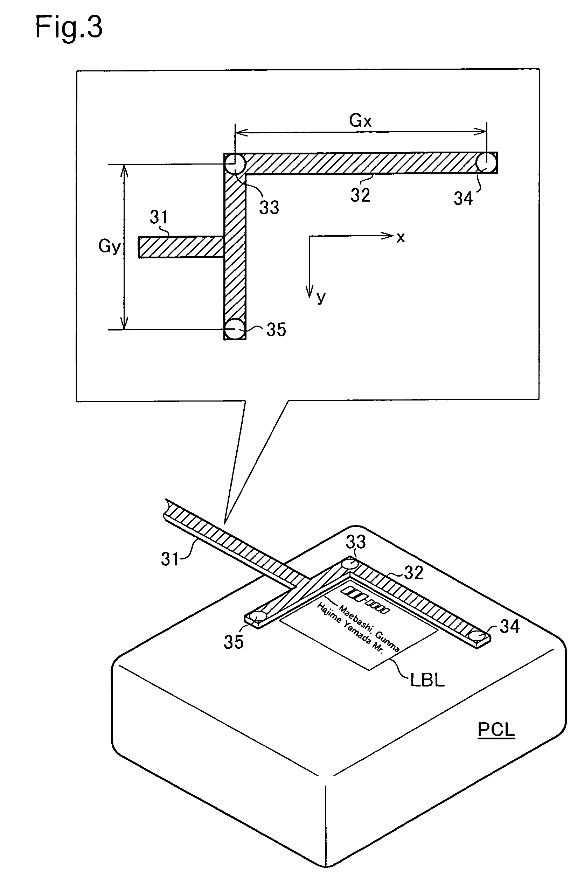

Fig. 3 shows the structure of the guide 31. The upper drawing is a plan view of the guide 31, and the lower drawing is a perspective view of the guide 31 located along the top face of a parcel PCL.

As illustrated, the guide 31 has a substantially L-shaped frame 32. The frame is extended along an axis x and an axis y of the image taken by the imaging unit 20. Markers 33 to 35 are set at a corner and respective ends of the frame 32 on its top face. There is a known distance Gx in the direction x between the markers 33 and 34. There is a known distance Gy in the direction y between the markers 33 and 35.

In the structure of this embodiment, the whole top face of the guide 31 is colored in black, whereas the markers 33 to 35 are colored in white. The colors of the top face of the guide 31 and the markers 33 to 35 may be selected arbitrarily. The large contrast like black and white is, however, desirable for the accurate detection of the positions of the markers 33 to 35.

The parcel PCL is located to adjust one corner of an address label LBL to the corner of the guide 31. The marker 33 located at the corner of the guide 31 specifies the origin of image data of the address label LBL. This facilitates mapping to the format definition. The actual degrees of fineness in the direction x and in the direction y in the image of the guide 31 taken in this state are computable with the numbers of pixels corresponding to the known distances Gx and Gy.

B. Imaging Control Process

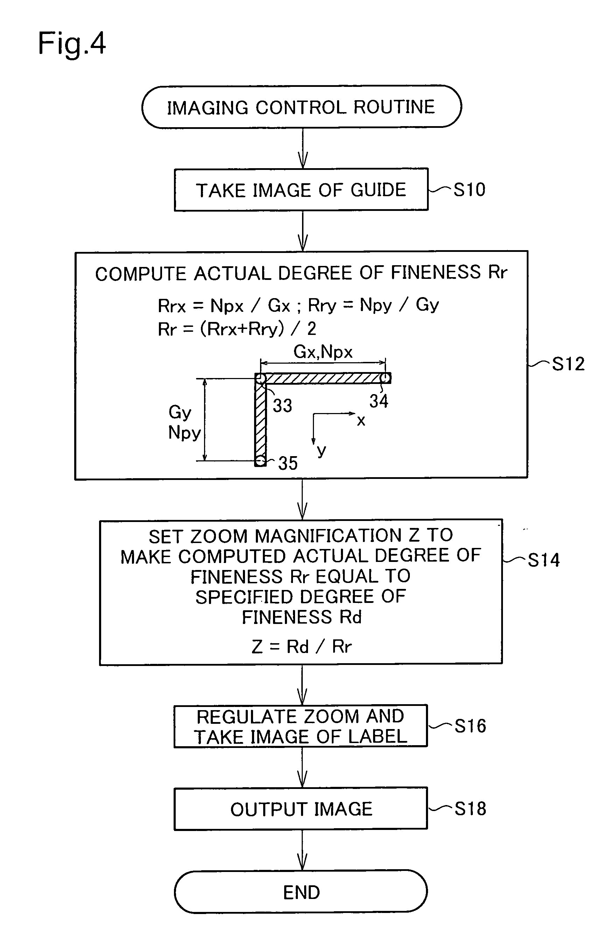

Fig. 4 is a flowchart showing an imaging control routine, which is executed by the imaging unit 20 to take an image of an address label pasted on a parcel at the specified degree of fineness in the format definition and to output the image to the address recognition device 40.

When the imaging control routine starts, the imaging unit 20 first takes an image of a guide located on the top face of he parcel (step S10). This imaging step may be carried out in response to the operator's manipulation of a corresponding switch on the imaging unit 20 or may be carried out automatically, for example, at a timing when a stop of the movement of the guide 31 is detected.

The imaging unit 20 computes an actual degree of fineness Rr at the imaging step according to a procedure below (step S12). The procedure specifies a number of pixels Npx between the centers of the markers 33 and 34 and a number of pixels Npy between the centers of the markers 33 and 35. These numbers of pixels Npx and Npy are equivalent to the known distances Gx and Gy. Actual degrees of fineness Rrx and Rry in the direction x and in the direction y are accordingly given as:

$$Rrx = Npx / Gx$$

$$Rry = Npy / Gy$$

The procedure of this embodiment sets the average of these actual degrees of fineness Rrx and Rry in the direction x and in the direction y to an actual degree of fineness Rr, although the actual degrees of fineness Rrx and Rry may be treated separately:

$$Rr = (Rrx + Rry) / 2$$

After computation of the actual degree of fineness Rr, the imaging unit 20 sets a zoom magnification Z to make the computed actual degree of fineness Rr substantially equal to a specified degree of fineness Rd (step S14). The zoom magnification Z is expressed as Z = Rd / Rr. For example, when the specified degree of fineness Rd is equal to 400 DPI and the actual degree of fineness Rr is equal to 200 DPI, the zoom magnification Z is set equal to 2 for imaging at the specified degree of fineness.

The default value of zoom magnification is set to give an image of an address label pasted on a parcel of a preset reference height at the specified degree of fineness. The zoom magnification and the height of the parcel have the following tendency. The zoom magnification is smaller than the default value for a parcel higher than the preset reference height and is greater than the default value for a parcel lower than the preset reference height.

The imaging unit 20 regulates the lens 21 to have a preset zoom magnification and takes an image of the address label (step S16) and finally outputs the image to the address recognition device 40 (step S18) to terminate the imaging control routine.

The address recognition device 40 extracts the respective character areas including those of the postal address and the name from the input image according to the format definition, recognizes characters in the extracted character areas by OCR processing, and outputs results of the character recognition, as discussed previously with reference to Fig. 2.

As described above, the label reader system of the first embodiment optically regulates the zoom magnification of the imaging unit 20 to take an image of an address label, which may be attached to parcels of varying heights, with a specified degree of fineness. The optical regulation of the degree of fineness advantageously reduces deterioration of the picture quality. The arrangement of the first embodiment thus ensures extraction of the respective character areas on the address label according to the format definition with high accuracy.

C. First Modified Example

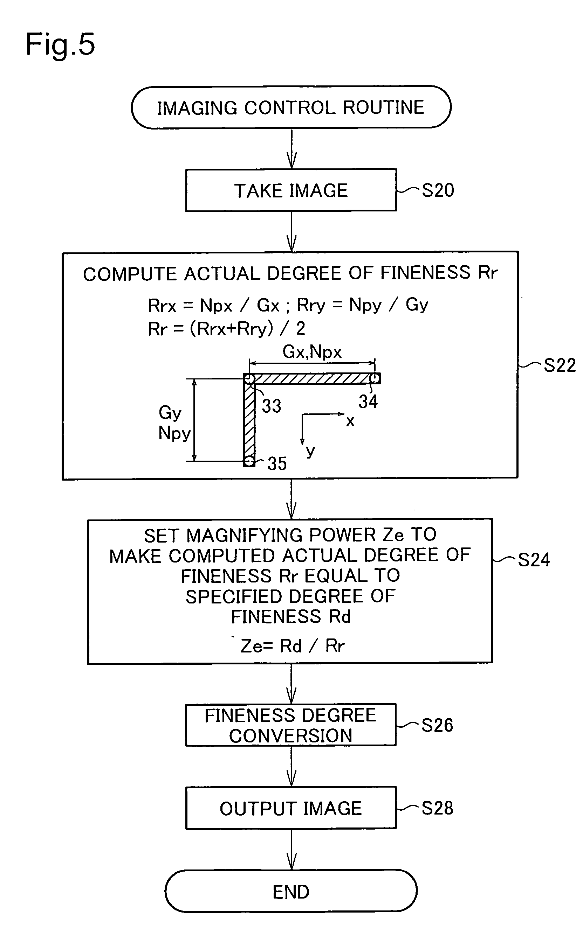

Fig. 5 is a flowchart showing an imaging control routine executed in a first modified example. This process carries out image processing to compensate for a difference between the actual degree of fineness and the specified degree of fineness.

The imaging unit 20 takes an image of the guide 31 and an address label at a preset zoom magnification (step S20) and computes the actual degree of fineness Rr based on the image according to the method of the first embodiment discussed above (step S22).

The imaging unit 20 then sets a magnifying power Ze to make the computed actual degree of fineness Rr substantially equal to the specified degree of fineness Rd (step S24). The magnifying power Ze is expressed as Ze = Rd/Rr. For example, when the specified degree of fineness Rd is equal to 400 DPI and the actual degree of fineness Rr is equal to 200 DPI, the magnifying power Ze is equal to 2.

The imaging unit 20 carries out fineness degree conversion at the setting of the magnifying power Ze with regard to the image taken at step S20 (step S26). The fineness degree conversion process carries out interpolation of pixels for enlargement of an image, while carrying out skipping of pixels for contraction of an image. The imaging unit 20 outputs a resulting converted image to the address recognition device 40 (step S28) to terminate this imaging control routine. The address recognition device 40 carries out the series of processing discussed in the first embodiment.

The arrangement of the first embodiment advantageously compensates for a difference between the actual degree of fineness and the specified degree of fineness without any mechanism of optically regulating the zoom magnification.

D. Second Modified Example

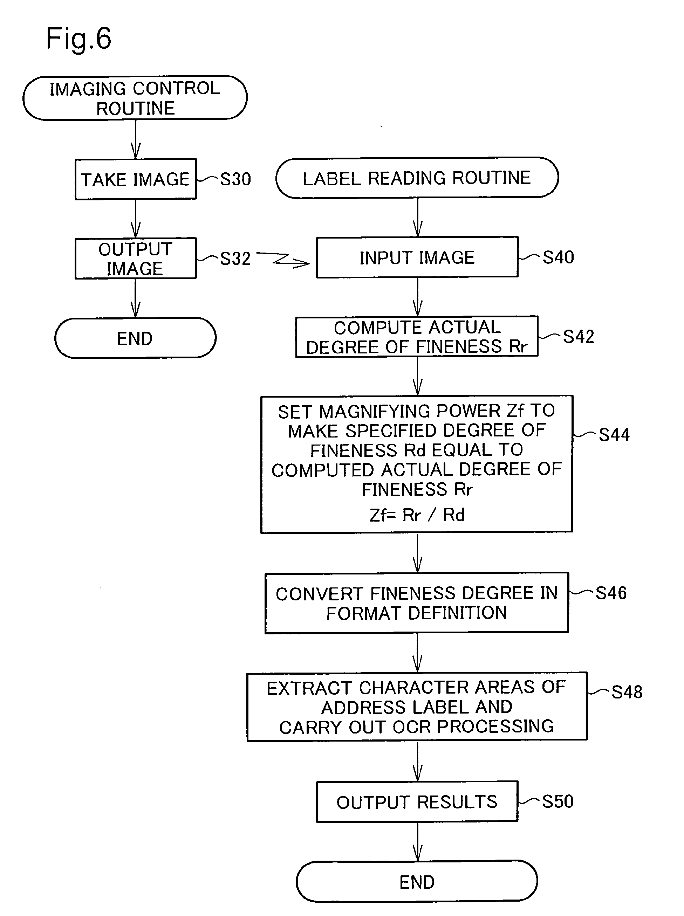

Fig. 6 is a flowchart showing a label reading routine executed in a second modified example. In this modified example, the address recognition device 40 executes a process of compensating for a difference between the actual degree of fineness and the specified degree of fineness. It is possible that the address recognition device 40 simply carries out the fineness degree conversion process discussed in the first modified example to compensate for the difference of the fineness degree. The procedure of the second modified example transforms coordinate values stored in the format definition for the purpose of the compensation. The imaging unit 20 executes an imaging control routine on the left side, whereas the address recognition device 40 executes a label reading routine on the right side.

The imaging unit 20 takes an image of the guide 31 and an address label (step S30) and outputs the image to the address recognition device 40 (step S32).

The address recognition device 40 inputs the image (step S40) and computes the actual degree of fineness Rr according to the method of the first embodiment discussed above (step S42). The address recognition device 40 then sets a magnifying power Zf used for coordinate transformation of the format definition to make the specified degree of fineness Rd substantially equal to the computed actual degree of fineness Rr (step S44). The magnifying power Zf is expressed as Zf = Rr/Rd.

The address recognition device 40 utilizes the setting of the magnifying power Zf to convert the degree of fineness in the format definition (step S46). The concrete procedure multiplies each coordinate value stored in the format definition by the magnifying power Zf to attain coordinate transformation. The address recognition device 40 uses the transformed coordinate values to extract the respective character areas from the image of the address label and recognize characters in the extracted character areas by OCR processing (step S48), and outputs results of the character recognition (step S50).

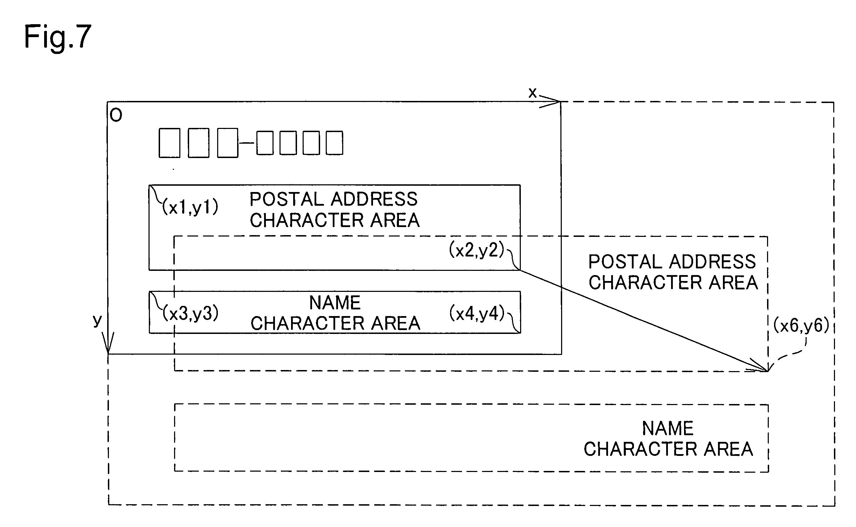

Fig. 7 shows fineness degree conversion of format definition. The solid lines represent format definition with a specified degree of fineness. In this format definition, a postal address character area is specified by two coordinate points $(x1,y1)$ and $(x2,y2)$, and a name character area is specified by two coordinate points $(x3,y3)$ and $(x4,y4)$.

An image taken at an actual degree of fineness, which is greater than the specified degree of fineness, is shown by broken lines. In this image, the postal address character area and the name character area exceed the range specified in the format definition. The procedure of this modified example multiplies the respective coordinate values in the format definition by the magnifying power Zf, which is expressed as the ratio of the actual degree of fineness to the specified degree of fineness, to make the format definition applicable to the image shown by the broken line. For example, multiplication by the magnifying power Zf transforms the coordinate values $(x2,y2)$ for specifying the postal address character area to coordinate values (x6,y6). The other coordinate values are transformed in a similar manner. The transformed coordinate values give the format definition corresponding to the actual degree of fineness. The respective character areas are thus adequately extractable from the image shown by the broken line.

The arrangement of the second modified example advantageously attains compensation for the difference between the specified degree of fineness and the actual degree of fineness by the relatively light-loading transformation of coordinate values stored in the format definition.

E. Second Embodiment

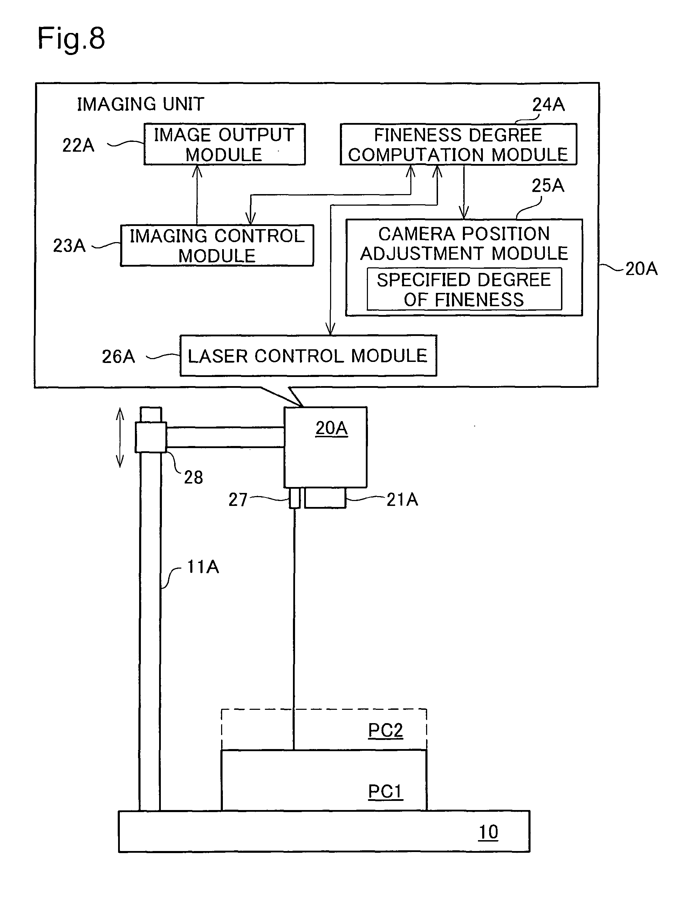

Fig. 8 schematically illustrates the configuration of another label reader system in a second embodiment of the invention. Illustration includes only the structure of an imaging device, while the structure of an address recognition device is omitted.

In the imaging device of the second embodiment, an imaging unit 20A is attached to an arm 11A by means of a holder unit 28. The holder unit 28 is vertically movable along the arm 11A, in response to control signals from the imaging unit 20A. Any of diverse known moving mechanisms is applicable to the holder unit 28, and no detailed description is given here.

The imaging unit 20A of the second embodiment has a laser light source 27. The laser light source 27 irradiates the top face of each parcel with two parallel downward laser beams at a fixed distance. The procedure of the second embodiment determines the actual degree of fineness based on the distance between two laser spots on the top face of the parcel and compensates for a deviation from the specified degree of fineness.

The illustration also shows functional blocks of the imaging unit 20A in the structure of the second embodiment. An imaging control module 23A and an image output module 22A have similar functions to those of the imaging control module 23 and the image output module 22 of the first embodiment. A laser control module 26A controls the laser light source 27 to emit laser beams, in response to an instruction from a fineness degree computation module 24A. The fineness degree computation module 24A determines the actual degree of fineness, based on the distance between two laser spots, as mentioned above. The procedure of the second embodiment moves the position of the imaging unit 20A in the vertical direction according to the actual degree of fineness and thereby compensates for the difference between the actual degree of fineness and the specified degree of fineness. A camera position adjustment module 25A regulates the holder unit 28 to attain such compensation. The structure of the second embodiment adopts this compensation technique and may thus use a fixed-focus lens 21A without the zoom function. The structure of the second embodiment may adopt any of the compensation techniques discussed in the first embodiment and its modified examples, instead of adjustment of the camera position.

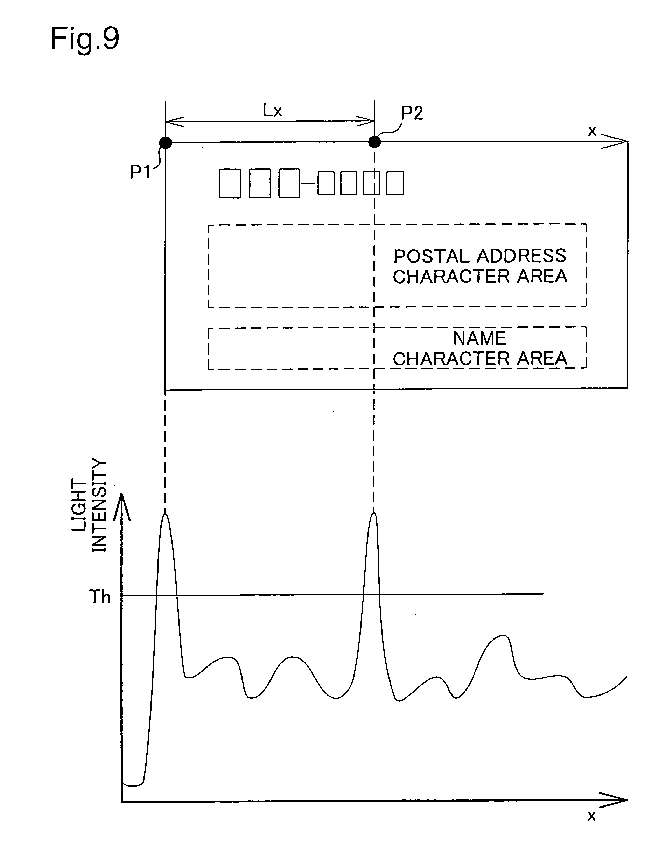

Fig. 9 shows a method of determining the actual degree of fineness with laser spots. In this illustrated example, an address label is irradiated with laser spots P1 and P2. The two laser spots Pland P2 are away from each other by a known distance Lx in a direction x. Since laser beams are emitted downward in the vertical direction, the distance Lx between the two laser spots is unchanged with a variation in height of parcels.

A variation in light intensity or lightness of an image taken by the imaging unit 20A is schematically shown in the graph of Fig. 9. Specific points of the image corresponding to the laser spots P1 and P2 have higher light intensities. Extraction of pixels having light intensities exceeding a preset threshold value Th in the image readily identifies the positions of the two laser spots P1 and P2 and thereby determines the actual degree of fineness. The threshold value Th is arbitrarily set in a range of clear discrimination between the intensities at the laser spots and the intensities at other sites. Like the markers set on the guide used in the structure of the first embodiment, the address label may be irradiated with three laser beams, which are not aligned.

The imaging control process of the second embodiment vertically moves the imaging unit 20A to make the actual degree of fineness substantially equal to the specified degree of fineness, instead of the processing of steps S14 and S16 in the first embodiment (see Fig. 4). One concrete procedure specifies and stores the relation between the actual degree of fineness, the specified degree of fineness, and the moving distance in the vertical direction as a function or in the form of a map and refers to the storage to determine the required moving distance of the imaging unit 20A. Another concrete procedure actually moves the imaging unit 20A little by little and measures the actual degree of fineness to find the position where the actual degree of fineness is equal to the specified degree of fineness by feedback control.

The arrangement of the second embodiment takes images with the specified degree of fineness, regardless of the height of parcels, like the first embodiment. The structure of the second embodiment utilizes laser pots and thus advantageously determines the actual degree of fineness with high accuracy even in the case where the curved surface of a parcel prevents adequate positioning of the guide used in the structure of the first embodiment.

F. Modifications

As described in detail with reference to the above embodiments and its modified examples, the fineness degree compensation module of the label reader system of the invention functions to restrict the difference between the specified degree of fineness and the actual degree of fineness in a predetermined allowable range under the condition of the varying distance between the imaging module and the label. This arrangement desirably prevents deterioration of recognition accuracy due to the variation in degree of fineness.

The embodiments discussed above are to be considered in all aspects as illustrative and not restrictive. There may be many modifications, changes, and alterations without departing from the scope or spirit of the main characteristics of the present invention.

(1) The technique of the invention is not restricted to parcels but is applicable to a wide variety of label reader systems.

(2) The technique of the invention is not restricted to imaging devices that take images in a vertically downward direction as discussed in the embodiments but is applicable to imaging devices that take images in a horizontal direction and in any other suitable directions.

All changes within the meaning and range of equivalency of the claims are intended to be embraced therein. The scope and spirit of the present invention are indicated by the appended claims, rather than by the foregoing description.

**Claims**

1. A label reader system that takes an image of a label and thereby generates raster data, said label reader system comprising:

   an imaging module that takes an image of the label; and
   a fineness degree compensation module that makes compensation and thereby restricts a difference between a specified degree of fineness in a format definition for defining a position of each character area included in the label and an actual degree of fineness in image data taken by said imaging module to a preset allowable range.

2. A label reader system in accordance with claim 1, wherein said fineness degree compensation module regulates an optical system of said imaging module to make the compensation.

3. A label reader system in accordance with claim 1, wherein said fineness degree compensation module carries out fineness degree conversion with regard to at least one of the image data taken by said imaging module and the format definition, so as to make the compensation.

4. A label reader system in accordance with claim 1, said label reader system further comprising:

   a regulation mechanism that regulates a distance between said imaging module and the label when the image of the label is taken,

   wherein said fineness degree compensation module controls said regulation mechanism to make the compensation.

5. A label reader system in accordance with claim 1, said label reader system further comprising:

   a fineness degree determination module that determines the actual degree of fineness, based on image data taken where a guide member with at least two reference markers set at a known distance is located to be in contact with surface of the label,

   wherein said fineness degree compensation module makes the compensation with the actual degree of fineness thus determined.

6. A label reader system in accordance with claim 1, said label reader system further comprising:

   a marker projection module that projects at least two reference markers at a known fixed distance, regardless of a varying distance between the label and said imaging module, on surface of the label; and
   a fineness degree determination module that determines the actual degree of fineness, based on image data obtained by taking an image of the at least two reference markers projected on the surface of the label,

   wherein said fineness degree compensation module makes the compensation with the actual degree of fineness thus determined.

7. A label reader system in accordance with claim 1, said label reader system further comprising:

   a fineness degree determination module that determines the actual degree of fineness, based on image data obtained by taking an image of at least two different positions in the label at a known distance,

   wherein said fineness degree compensation module makes the compensation with the actual degree of fineness thus determined.

8. A label reader system in accordance with claim 1, said label reader system further comprising:

   a fineness degree determination module that determines actual degrees of fineness in at least two different directions, based on at least three reference markers that are set on surface of the label to be not aligned,

wherein said fineness degree compensation module makes the compensation with regard to the at least two different directions, based on the actual degrees of fineness thus determined.

9. A label reading method that takes an image of a label and generates raster data, said label reading method comprising:

an imaging step that takes an image of the label; and
a fineness degree compensation step that makes compensation and thereby restricts a difference between a specified degree of fineness in a format definition for defining a position of each character area included in the label and an actual degree of fineness in image data taken in said imaging step to a preset allowable range.

10. A computer readable medium storing a computer program used for image processing of image data obtained by taking an image of a label, said computer program causing a computer to attain the functions of:

inputting the image data; and
carrying out fineness degree conversion with regard to at least one of the image data and coordinate values of a format definition to make compensation and thereby restricts a difference between an actual degree of fineness in the image data and a specified degree of fineness in the format definition to a preset allowable range.

# Fig.1

POSTAL ADDRESS
CHARACTER AREA

NAME
CHARACTER AREA

O

x

y

(x1,y1)

(x2,y2)

(x3,y3)

(x4,y4)

DSC

STD

Np

PC2

L2

L1

PC1

PLT

EP 1 505 533 A2

## Fig.2

ADDRESS RECOGNITION DEVICE

OCR PROCESSING MODULE — 42

RESULT OUTPUT MODULE — 43

40

41 — IMAGE INPUT MODULE

FORMAT DEFINITION — 44

IMAGING UNIT

22 — IMAGE OUTPUT MODULE

24 — FINENESS DEGREE COMPUTATION MODULE

20

23 — IMAGING CONTROL MODULE

25 — ZOOM REGULATION MODULE

SPECIFIED DEGREE OF FINENESS

20

21

11

30    31    PC2

PC1

10

11

# Fig.3

Gx

Gy

31

32

33

34

35

x

y

31

32

33

34

35

LBL

Maebashi, Gunma
Hajime Yamada Mr.

PCL

# Fig.4

```
┌─────────────────────────────────┐
│     IMAGING CONTROL ROUTINE     │
└─────────────────────────────────┘
                 │
                 ▼
┌─────────────────────────────────┐
│      TAKE IMAGE OF GUIDE        │──S10
└─────────────────────────────────┘
                 │
                 ▼
```

COMPUTE ACTUAL DEGREE OF FINENESS Rr — S12

$Rrx = Npx / Gx$ ; $Rry = Npy / Gy$

$Rr = (Rrx+Rry) / 2$

SET ZOOM MAGNIFICATION Z TO MAKE COMPUTED ACTUAL DEGREE OF FINENESS Rr EQUAL TO SPECIFIED DEGREE OF FINENESS Rd — S14

$Z = Rd / Rr$

REGULATE ZOOM AND TAKE IMAGE OF LABEL — S16

OUTPUT IMAGE — S18

END

# Fig.5

```
        ┌──────────────────────────────┐
        │   IMAGING CONTROL ROUTINE    │
        └──────────────────────────────┘
                      │
                      ▼
        ┌──────────────────────────────┐
        │         TAKE IMAGE           │──S20
        └──────────────────────────────┘
                      │
                      ▼
```

COMPUTE ACTUAL DEGREE OF FINENESS Rr

$Rrx = Npx / Gx$ ; $Rry = Npy / Gy$

$Rr = (Rrx + Rry) / 2$

— S22

33    34    35

Gx, Npx

Gy
Npy

x

y

SET MAGNIFYING POWER Ze TO
MAKE COMPUTED ACTUAL DEGREE OF
FINENESS Rr EQUAL TO
SPECIFIED DEGREE OF
FINENESS Rd

$Ze = Rd / Rr$

— S24

```
        ┌──────────────────────────────┐
        │    FINENESS DEGREE           │──S26
        │      CONVERSION              │
        └──────────────────────────────┘
                      │
                      ▼
        ┌──────────────────────────────┐
        │        OUTPUT IMAGE          │──S28
        └──────────────────────────────┘
                      │
                      ▼
        ┌──────────────────────────────┐
        │            END               │
        └──────────────────────────────┘
```

# Fig.6

```
┌─────────────────────┐
│  IMAGING CONTROL    │
│     ROUTINE         │
└─────────────────────┘
          │
          ▼
┌─────────────────┐
│   TAKE IMAGE    │──S30        ┌──────────────────────────┐
└─────────────────┘             │   LABEL READING ROUTINE  │
          │                     └──────────────────────────┘
          ▼                                  │
┌─────────────────┐                          ▼
│     OUTPUT      │──S32  ⇒       ┌──────────────────────┐
│     IMAGE       │               │     INPUT IMAGE      │──S40
└─────────────────┘               └──────────────────────┘
          │                                  │
          ▼                                  ▼
┌─────────────────┐               ┌──────────────────────┐
│      END        │               │   COMPUTE ACTUAL     │──S42
└─────────────────┘               │ DEGREE OF FINENESS Rr│
                                  └──────────────────────┘
                                             │
                                             ▼
                              ┌──────────────────────────────┐
                              │  SET MAGNIFYING POWER Zf TO   │
                              │  MAKE SPECIFIED DEGREE OF     │──S44
                              │  FINENESS Rd EQUAL TO         │
                              │  COMPUTED ACTUAL DEGREE OF    │
                              │  FINENESS Rr                  │
                              │  Zf= Rr / Rd                  │
                              └──────────────────────────────┘
                                             │
                                             ▼
                              ┌──────────────────────────────┐
                              │  CONVERT FINENESS DEGREE IN   │──S46
                              │  FORMAT DEFINITION            │
                              └──────────────────────────────┘
                                             │
                                             ▼
                              ┌──────────────────────────────┐
                              │  EXTRACT CHARACTER AREAS OF   │──S48
                              │  ADDRESS LABEL AND            │
                              │  CARRY OUT OCR PROCESSING     │
                              └──────────────────────────────┘
                                             │
                                             ▼
                              ┌──────────────────────────────┐
                              │      OUTPUT RESULTS           │──S50
                              └──────────────────────────────┘
                                             │
                                             ▼
                              ┌──────────────────────────────┐
                              │            END               │
                              └──────────────────────────────┘
```

$Zf = Rr / Rd$

## Fig.7

EP 1 505 533 A2

# Fig.8

IMAGING UNIT

| 22A — IMAGE OUTPUT MODULE | 24A FINENESS DEGREE COMPUTATION MODULE |

23A — IMAGING CONTROL MODULE

25A CAMERA POSITION ADJUSTMENT MODULE

SPECIFIED DEGREE OF FINENESS

20A

26A — LASER CONTROL MODULE

20A

28

27

21A

11A

PC2

PC1

10

# Fig.9

POSTAL ADDRESS
CHARACTER AREA

NAME
CHARACTER AREA